Europäisches Patentamt

European Patent Office

Office européen des brevets

(19)

(11) **EP 1 457 888 A1**

(12) ## EUROPEAN PATENT APPLICATION

(43) Date of publication:
**15.09.2004 Bulletin 2004/38**

(51) Int Cl.$^7$: **G06F 17/00**

(21) Application number: **03004962.1**

(22) Date of filing: **10.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Grassmann, Hans, Prof. Dr.
33100 Udine (IT)**

(72) Inventor: **Grassmann, Hans, Prof. Dr.
33100 Udine (IT)**

(74) Representative: **Klunker . Schmitt-Nilson . Hirsch
Winzererstrasse 106
80797 München (DE)**

(54) **Data processing device and a related method of data processing**

(57)    The application discloses a data processing device adapted for parallely processing a plurality of n digital input numbers $q_i$ composed of $p_i$ bits comprises

$$\text{(a)} \quad \sum_{i=1}^{n} 2^{(p_i)}$$

input lines $L_j$,
wherein each possible value within the value range of digital input number $q_i$ is assigned to a predefined one of the binary input lines $L_j$, and (b) a plurality of output mapping units, each of the output mapping units creating an output signal responding to a specific coinstantaneous binary pattern of input bits, and each of the output mapping units operating in a parallel fashion to and independently of all other status mapping units of the plurality of output mapping units. The application further discloses a data processing method, comprising the steps of accepting an input message in a digital form, transforming the input message from the digital form into a fundamental number, and assigning a result message to the fundamental number of the input message.

Fig. 6

EP 1 457 888 A1

**Description**

The present invention relates to a data processing device and to a related method of data processing.

Present day computers of the von Neumann architecture are manifestations of the general Turing Machine - they execute mathematical algorithms serially in a step by step fashion. As input they have a message of n bits. After reading this message, the computer operates on it in a sequence of k steps until the last step of operation arrives at the result of the computation. The result of the operation can have again n bits, or it can have any other number of bits. Even for a computer of limited storage and with an operating program of limited size the number of steps k can be arbitrarily large and, hence, the resulting computing time may correspondingly also be very large. Turing machines consist of a (temporal) sequence of operational steps. Essentially, the output of each step is used as input for the next computational step. In this sense, executing several computational steps at a time is against the nature of the Turing machine. There are a lot of advanced computer architectures known aiming to speed up computation by establishing various kinds of parallel processing. However, by their very nature, such computers still are sequential machines of the von Neumann type embodying the abstract theory of the Turing Machine.

There are programs in use which verify whether a certain computing step has already been executed on a certain input value, in which case this step is not repeated, but the program is directly using the previously computed result (in the following this procedure is referred to as procedure (a)). In this way the computer may save computing time.

Graphics programs sometimes do not explicitly execute computing routines but re-use results previously obtained by utilising look-up tables, for instance for determining the points of a circle (referred to as procedure (b) in the following).

However, when attacking more complex problems, the traditional way of utilising look-up tables becomes clumsy if not unfeasible because either the numerical precision of such lookup table is very limited or else because of the size of such tables tends to be extremely large.

Hence, an object of the present invention is to provide an improved data processing device as well as a related method overcoming such problems in an advantageous way.

This object is solved in accordance with the invention by the subject-matter of independent claims 1, 5, 6, 7, 8, 9, 17, 18, 20, 21. The dependent claims privide further enhancements.

The invention proposes a data processing device as well as a related method for increasing the speed of computation by performing the computation process in a non-sequential way. This is achieved in accordance with the invention by means of non-algorithmic digital computing.

We assume a computer C which is adapted to perform a certain operation f on an input message of n bits. There are then $2^n$ different possible input values and at maximum $2^n$ different output values of this operation f. Now, the remainder class modulo 2 is a field of cardinality 2, written $F_2$. It can be used to construct the arithmetic vector space $F_2^n$, the elements of which can be represented by n-dimensional vectors. Each n-bit input message can be represented by an element of $F_2^n$. Therefore digital messages including the said input messages can be treated as vectors in a mathematical sense. As a consequence the corresponding laws of algebra apply to them. In the following we will refer to the vector space $F_2^n$ as "message space". Any data processing of this input message can then be expressed by a transformation T which operates on the input message vectors and transforms them to output message vectors.

But in order to fully exploit the potential of data processing device adapted to perform a transformation T which operates on the input message vectors and transforms them to output message vectors, a de-digitised presentation of numbers is preferred. In the following reference will be made to de-digitised numbers also as "fundamental numbers". "Digitising" means that one attributes to each of the $2^n$ elements of an ensemble a certain combination of n digits. For instance, to the numbers 1, 2, 3 (which are elements of the ensemble called "natural numbers") the digital combinations (...0, 0, 1), (...0, 1, 0), (...0, 1, 1) can be assigned. These $2^n$ vectors can however be mapped on the $2^n$ basis vectors of a $2^n$ dimensional vector space, again over the remainder class modulo 2. For instance, the numbers (...0, 0, 1), (...0, 1, 0), (...0, 1, 1) can be written as (...0, 0, 0,1 ), (...0, 0, 1, 0), (...0, 1, 0, 0). That is, instead of attributing to each element of an ensemble a digital pattern we now attribute to each digital pattern an element of an ensemble - the number is "de-digitised". In more general: If an input message can produce $2^n$ independent values then the input message can either be expressed in terms of a digital number of n bits length, or instead in terms of a fundamental number with $2^n$ bits.

Known data processing devices like the usual computers of the von Neumann type are usually based on the representation of input messages by technical means comprising n input lines adapted to process digital numbers of n bits length. A first aspect of the invention is in particular related to data processing devices comprising $2^n$ input lines, each of the input lines representing a fundamental number.

In accordance with this first aspect of the invention, a data processing device adapted for parallely processing a plurality of n digital input numbers $q_i$ composed of $p_i$ bits comprises

$$\text{(a)} \quad \sum_{i=1}^{n} 2^{(p_i)}$$

input lines $L_j$,
wherein each possible value within the value range of digital input number q; is assigned to a predefined one of the binary input lines $L_j$, and (b) a plurality of output mapping units, each of the output mapping units creating an output signal responding to a specific coinstantaneous binary pattern of input bits, and each of the output mapping units operating in a parallel fashion to and independently of all other status mapping units of the plurality of output mapping units.

A second aspect of the present invention is related to a data processing device based on fundamental numbers using storage elements. If a data processing device has all of the $2^n$ possible output values responding to a message space of n bits available in a storage it does not need to perform the computation f but can instead look up the result in a table stored by means of the said storage elements, the table containing the said $2^n$ possible result elements. In this case, the data processing device does not need to execute the algorithm f; it does not even need to have the capability to do so. It only needs to have the relevant table in its storage. This table can be calculated with a dedicated computer A. A needs to perform the calculation for f only once.

Such device is different from above mentioned procedure (a), since the computer C does not need to perform the algorithm f at any time. Moreover, such device is also different from (b): look-up tables for graphic routines give an output of very limited precision. If this output would be used as input to a computation consisting of many steps of operation, the final result of the operation would suffer from an even larger uncertainty due to round off errors. The device related to the invention instead intends to completely substitute the many steps of the algorithm - so that no round off errors do occur -, and it is intended to be performed to the full required numerical precision, by means of procedures described in the following.

To use a look-up table instead of performing a complicated operation f is straightforward, as long as f has only one number of input. For instance, if the input of f is given by a 32 bit number, the table needs to consist of $2^{32}$ elements. Even a Personal Computer could handle this. (One further needs to consider, that due to the absence of round-off errors, less then 32 bits may be sufficient in order to obtain the desired numerical precision for the final result of the computation.)

If instead f has several 32-digit numbers as input, measures need to be taken in order to keep the use of a look-up table practical

The invention will now be explained further in detail with reference to the drawing. In the following we will for brevity refer to the input numbers as "co-ordinates in phase space".

**Fig. 1**     shows a particle tracking device consisting of four detector layers, the signals of which can advantageously be analysed by a device and method in accordance with the invention.

**Fig. 2**     shows a diagram explaining a 2-dimensional space being subdivided in two-dimensional boxes according to the subdivision shown in **Fig. 1.**

**Fig. 3**     shows a schematic cut diagram of a Venturi tube with a a gas flow therein, the physical conditions of which can advantageously be analysed by a device and method in accordance with the invention.

**Fig. 4**     shows volume cells in the Venturi tube depicted in **Fig. 3.**

**Fig. 5**     shows a diagram illustrating a region of phase space (vx,vy) populated by the model of **Fig. 3.**

**Fig. 6**     shows the use of a demultiplexer with a parallel data input for look- up table values based on fundamental numbers.

**Fig. 7**     shows a schematic circuit diagram explaining a possible technical realisation of the demultiplexer depicted in **Fig. 6**

**Fig. 8**     shows a schematic circuit diagram of a "programmable gate" to be used in the context of the demultiplexer depicted in **Fig. 6.**

**Fig. 9**     shows a schematic circuit diagram for processing of fundamental numbers.

**Fig. 10**    shows a schematic circuit diagram illustrating an embodiment of a data processing device based on groups of fundamental numbers.

**Fig. 11**    shows a schematic circuit diagram illustrating an embodiment of a data processing device based on fundamental numbers further improved over that shown in **Fig. 10** and also being adapted in particular for calculating the states of the Venturi tube shown in **Fig. 2.**

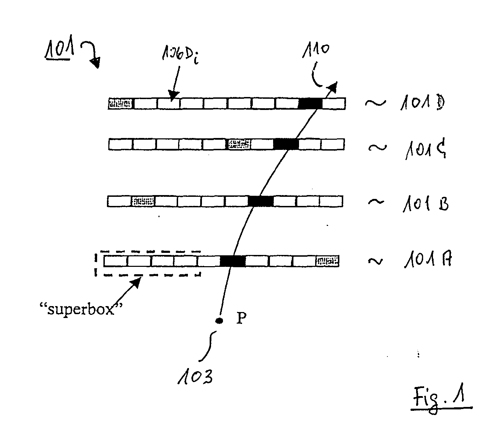

**Fig. 1** shows a particle tracking device 101 consisting of four detector layers 101A, 101B, 101C, each of the layers comprising a plurality of particle detector cells $106A_i$, $106B_i$, $106C_i$, $106D_i$. These cells do not necessarily correspond to the hardware structure of the device but represent the numerical precision of the measurement. In a physics experiment a charged particle 103 may emerge from a known point in space into some direction and with an unknown momentum p. Due to the presence of a magnetic field (not depicted), the trajectory 110 of the particle will be bent. From this bending, the momentum of the particle 103 can be calculated. The position of the particle is observed by the particle tracking device 101. Passing each of the layers 101A, 101 B, 101 C, 101 D thereof, the particle 103 creates a signal in one of the detector cells $106A_i$, $106B_i$, $106C_i$, $106D_i$. The position of the particle in each of the layers is denoted by $x_A$, $x_B$, $x_C$, $x_D$. corresponding to the respective tuple out of the detector cells $106A_i$, $106B_i$, $106C_i$, $106D_i$ which are hit by the particle 103. This position is not known with infinite precision but it is know to the calculus only with the numerical precision of the input being represented by the size of the boxes. The magnetic field is not necessarily homogenous. In **Fig. 1,** hits caused by a track 110 are shown as black boxes. A few spurious hits, not caused by a track are shown in grey. Particles emerge from the point denoted "P". The black boxes are "hits" caused by the particle. The grey boxes represent signals from electronics noise or other sources of noise.

In order to analyse a measurement made in accordance with the arrangement shown in **Fig.1,** the signals $A_i$, $B_i$, $C_i$, $D_i$ obtained by the detector cells $106A_i$, $106B_i$, $106C_i$, $106D_i$ corresponding to the position values $x_A$, $x_B$, $x_C$, $x_D$, i=1 to n, where n denotes the total number of detector cells per detector layer, have to be treated as a n-bit input messages to be input into a data processing device.

The conventional method of reconstructing the track and its momentum is to perform fits to the various combinations of hits found in the detector layers and to evaluate the quality of these fits. The procedure is not trivial because normally many tracks hit the detector at the same time and because there are also "fake" hits due to electronics noise.

In the absence of any secondary effects each track, regardless of its direction and of its momentum will cause one characteristic hit pattern. In reality there are secondary effects like scattering of the particle etc., and therefore a certain track can result in several slightly different hit patterns. If the respective hit patterns for particles of all possible directions and momenta are known then it is possible to directly determine momentum and direction of the particle from the observed hit pattern without performing any fit.

If an array is available - referred to as "look-up table" in the following -, which contains for each possible combination of the four input variables $x_A$, $x_B$, $x_C$, $x_D$ the required output values (like angle of the track and momentum), then the computer does not need to perform any conventional calculation (like performing a fit), but instead can just look up the result in the table.

The scheme as shown in **Fig. 1** is not to scale for sake of illustrative simplicity. Let us assume that in a more realistic scenario there are $10^3$ different hit positions possible in each layer. In order to list all the possible four-hit combinations one would need a look-up table with $10^{12}$ elements. A look-up table of this large size might be impractical or impossible to handle.

However, most of these $10^{12}$ combinations cannot be caused by a real track, as is indicated in **Fig. 1,** where also four "pseudo-hits" are shown caused by electronic or other noise but not by a track. If the computing architecture allows to do this it is possible to omit in the look-up table all hit combinations which are not from a real track.

For doing this, the computer architecture and the computing language must allow to call non-existent elements in an array of numbers. If this is not possible, if to any address in an array there must be an element (this is the case in a conventional RAM), then one or several of the following methods can be applied; these can of course also be applied to a computer which allows to call non-existent array elements:

For instance, one can group ten neighbouring boxes together into one "superbox". In **Fig. 1** not ten, but only four boxes are grouped together for demonstration. Each detector layer now consists of 100 superboxes. A look-up table which describes all possible configuration of these superboxes must contain $10^{2*4} = 10^8$ elements, instead of $10^{12}$.

Most of these $10^8$ combinations cannot be created by a real track as indicated by the grey boxes in the figure. Let us assume a particle which hit one particular super box in layer 1 can potentially cause hits in two of the superboxes of layer 2, in 3 of layer 3 and in 4 of the superboxes of layer 4. Then real tracks are represented by one of 100*2*3*4 = 2400 superbox combinations. Only for these combinations further information is required in order to reconstruct the track to the fullest possible precision; for the unphysical combinations - not representing real tracks - further information is not required. That means, only 2400 out of $10^8$ combinations are relevant for further processing and need to be considered in the final look-up table which therefore needs to contain $10^{12}*2400/10^8 = 2.4*10^7$ elements. All in all we can use in our example two tables with 2400 and with $2.4*10^7$ elements respectively, instead of one single table with $10^{12}$ elements. The procedure can be further improved by using more than two subsequent tables.

Another way of reducing the number of elements in the look-up table is the use of symmetry relations : If the particle detector has cylindrical symmetry around the point from which the particles emerge, for instance, then one can use as parameters for the phase space (x1, x2-x1, x3-x1, x4-x1). From (x2-x1, x3-x1, x4-x1) one gets the momentum of the track and an angle $\varphi1$, from x one obtains another angle $\varphi2$, so that the angle of the track $\varphi = \varphi1 + \varphi2$ can be obtained.

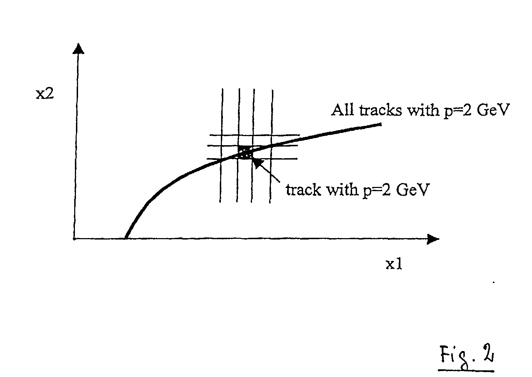

Or instead one can use a simple function which has been obtained from a fit and which has no explicit physics meaning in order to describe the look-up table. In **Fig. 2** we show only two dimensions of phase space, x1 and x2, as an example. The 2-dimensional space (x1, x2) is subdivided in two-dimensional boxes according to the subdivision of x1 and x2 shown in **Fig. 1**. The solid line denotes tracks with (for instance) a momentum of 2 GeV. Each two-dimensional box in (x1, x2) corresponds to a track of a certain direction and a certain momentum (or to a random hit combination). Instead of explicitly storing these two numbers in a look-up table it is possible to determine a function with two input parameters for direction and momentum, respectively, and four output parameters for the 4 detector layers, respectively, from a fit to the contents of the look-up table. In order to keep this function simple the phase space may be subdivided in regions, and a separate fit may be performed for each of these regions.

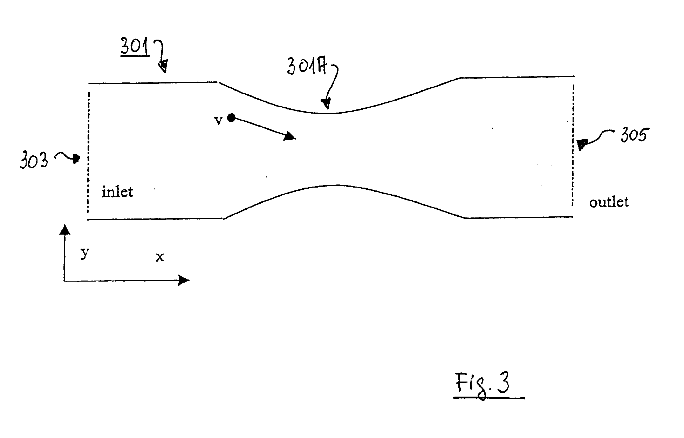

**Fig. 3** shows as another exemplary scenario, a Venturi tube 301. Often a certain result cannot be determined analytically but can only be approximated in an iterative process. Examples are fluido-dynamic simulations where one wants to describe the flow of a liquid in a given situation defined by its geometry and its boundary conditions, for example the Ventury tube 301. In **Fig. 3,** a gas flows through a tube with a narrow section 301A from an inlet 303 to an outlet 305.

Air is entering from the left at a speed of 5m/s parallel to the x-axis. At the narrowest point the cross section of the tube may get reduced by a factor of two. For reasons of mass conservation, we will therefore find that the velocity component in the x direction, vx, must in our model essentially be between 5 m/s (at the inlet and at the outlet) and 10 m/s (in the straight section). The values of vy will be between 0 and a maximum value, which depends on the shape of the tube, it may for instance be 3 m/s.

In order to determine numerically the velocity and pressure field of this flow, one proceeds as follows: the model is subdivided into small volumes, called "cells". Boundary conditions are defined for the calculus, which describe the physics situation. In our example one would impose that air shall always enter at a velocity of 5 m/s at the inlet at a given pressure. In a first step, the program assigns the boundary conditions to the cells at the inlet. The remaining cells may for instance all get assigned the velocity 5 m/s, too. Based on these values, an algorithm assigns then to each cell within the simulation volume new values for the velocity and the pressure with the values at the inlet being kept constant, this is the first iterative step. The procedure is repeated till predefined convergence criteria are being met.

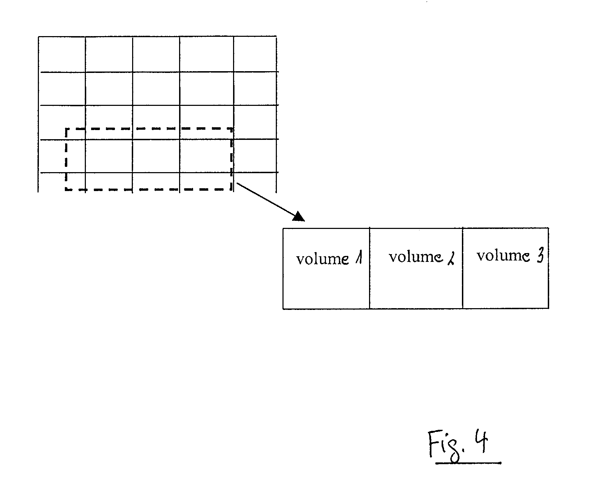

More in detail, a fluidodynamic simulation works as follows: As depicted in **Fig. 4**, in each cell "volume 1", "volume 2", "volume 3" the air has a certain velocity (here we consider only the longitudinal component) v, and a certain pressure, p. Volume 1 has v(1) and p(1), volume 2 has v(2) and p(2) etc. An assumption is made that i iterative steps have already been done. This is noted as

$$v(1,i), p(1,i) \text{etc.} \tag{1}$$

The next iterative step consists now in assigning new values

$$v(1, i+1), p(1, i+1), v(2, i+1), p(2, i+1) \text{ etc.} \tag{2}$$

for instance for volume 2 :

$$v(2, i+1) = v(2, i) + F'(v(1, i), p(1, i), v(2, i), p(2, i)) \tag{3}$$

or simply

$$v(2, i+1) = F(v(1, i), p(1, i), v(2, i), p(2, i)) \tag{4}$$

where F is a function which represents the physics law governing the problem (for instance an approximation of the Navier Stokes equation). F can be expressed in a look-up table (based on fundamental numbers).

If we give as an input

$$v(1, i), p(1, i), v(2, i), p(2, i) \qquad (5)$$

we get as output from F the new value for v(2) in this new iterative step, that is

$$v(2,i+1) \qquad (6)$$

This procedure is then applied to the next cell, "volume 3", then to the next one, "volume 4" etc., in a temporal sequence.

If the equations (1) to (6) are evaluated for pairs of cells in a temporal sequence cell after cell, then the program does need to know the identity of the cells. It is sufficient to give as input two values for velocity and two for pressure : "p,v, p,v". The computer "knows" which cell we mean, since the computer "knows" at which point it is in the program : if it is being at the point, where v(2) is calculated, then the output of F will necessarily be v(2).

If we calculate the required values of F for several cells at the same time, then we need to identify the cell to which a certain input and output number refers to - again we give the four relevant values for velocity and pressure, but now we add the number "2" for "volume 2". The output F will then again be the new value for the velocity, but in addition there will be the number "2", indicating that this is the new velocity for cell number 2.

The actual values for v and p are expressed by the corresponding fundamental numbers, that is, for a certain value of v(1) a certain line is activated. In addition to being activated, this very line also carries the number "2", for indicating, that it got activated for calculating the new value for cell number 2.

So each iteration consists of: send N quadruples from N cells to the look-up table, activate the look-up table, attribute each of the N outputs to its corresponding cell.

There are different algorithms which can be used for this calculus. They all have in common that a certain number of input numbers (for instance the velocity components and the pressure in the cells) are transformed to output numbers, giving the new values for velocity and pressure. One can therefore substitute such an algorithm by a look-up table.

Again this look-up table can be split in several tables of increasing precision:

At the beginning of the iterative process, the velocity and the pressure fields determined by the program will deviate from the correct ones very much. This large deviation is not due to the limited numerical precision of the computer but lies in the very nature of the iterative procedure. Therefore such an iterative calculus can be started with numbers of very limited numerical precision.

If the program converges, its result will at some point become sensitive to this limited numerical precision. But at this point the flow field will be known in approximation. And one will therefore know in approximation which part of the phase space is populated by the model.

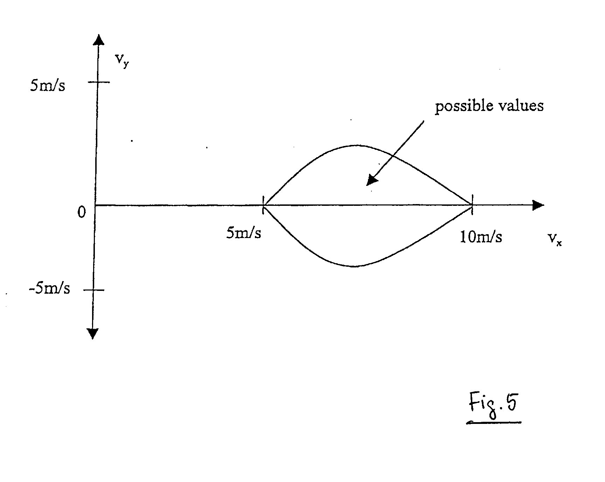

This is demonstrated in **Fig. 5,** using as phase space variables $v_x$ and $v_y$ as an example, though the calculus actually may use different variables. **Fig. 5** shows a region of phase space ($v_x$, $v_y$) populated by the model of **Fig. 3.** In this case, $v_x$ must be between 5 m/s and 10 m/s, as explained above, $v_y$ between -3 m/s and 3 m/s (for instance), and there is a correlation between these variables, since where the flow is fast and where it is slow, it does not move in the y-direction.

Once the iterative process has provided an approximate population of the relevant phase space, a new look-up table can be used, which contains only the relevant part of the phase space, but which has an increased precision.

And again, it is an option to substitute a table of discrete numbers by a simple phenomenological fit.

It is possible to program the described procedure on a conventional computer. But one can also built a dedicated device for this purpose.

A simple mechanical representation of a device according to the invention can be imagined as an array of lamps, each lamp with a switch. On the switch we write the input number, and on the corresponding lamp the output number. For any given input we get the required result just by activating the relevant switch.

One can even switch several switches at a time, that is, one can perform several calculations at the same time.

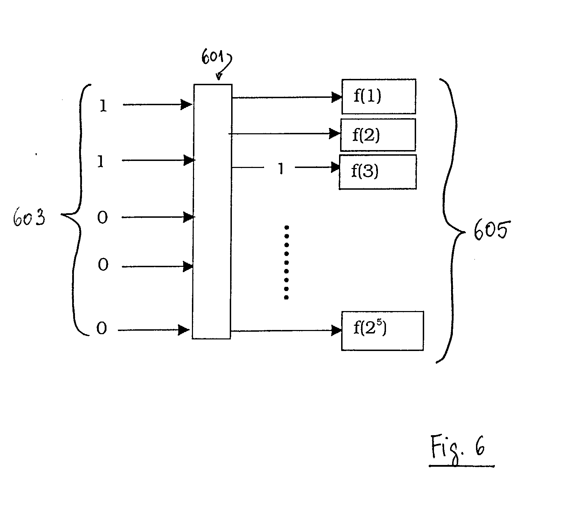

A first embodiment to use a look-up table is shown in **Fig. 6.** A demultiplexer 601 is provided having n input lines 603 and $2^n$ output lines 605. For each of the $2^n$ possible n-digit input messages, a corresponding output signal is produced (in the figure, n=5 for demonstration). In the figure, the input signal (0,0,0,1,1), corresponding to the hexadecimal number "3" will activate the third output line.

A digital number is decoded by the demultiplexer 601 which sends a signal to a corresponding element of a random access storage memory RAM (not depicted), the contents of which is then output (This is how a conventional RAM works). If a RAM operates on address numbers of n bits, then it contains $2^n$ storage elements. A conventional

RAM with $2^n$ storage elements cannot operate on address numbers with m bits, with m>n. If for instance the input to a look-up table consists of four numbers with 16 bits each then a conventional RAM would need to contain $2^{64}$ elements, even if for the calculus very most of these elements are never going to be used.

Applying a virtual memory does ease the situation but does notresolve the problem. Also the virtual memory itself would (in our example) need to contain a list of $2^{64}$ elements.

One can of course store the few relevant elements together with their addresses in an array and have the computer loop through the whole array, till it finds the looked for address. But this procedure is very slow.

With regard to **Fig. 6** we assume the input to be a five-bit number. In general, the input consists of a digital number of n bits. The demultiplexer 601 associates to each possible input number 603 a specific output 605. For instance, for the input (0,0,0,1,1), the third output line is activated.

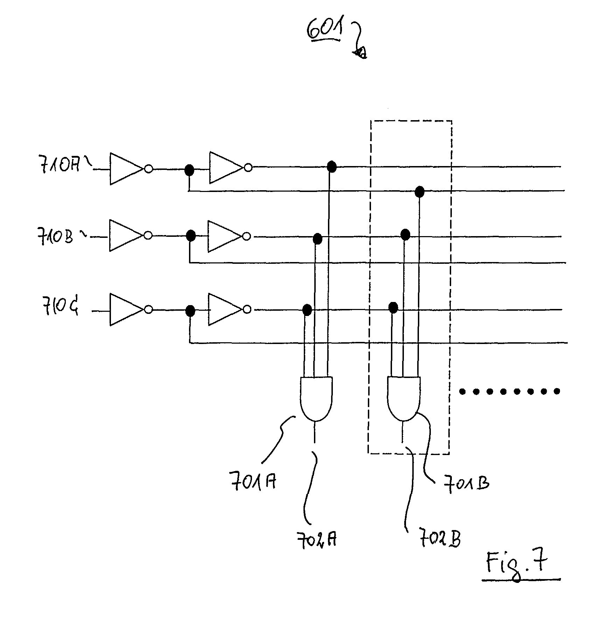

**Fig. 7** shows a schematic circuit diagram explaining a possible technical realisation of the demultiplexer 601 comprising a plurality of gates 701A, 701 B etc. For example, the gate 701 B activates an associated output line 702B if there is a signal on both input lines 710B and 710C and none on 710A.

A demultiplexer consists of elements, which may be referred to as AND gates 701A, 701 B as shown in **Fig. 7**. Each gate 701A, 701 B is coupled to certain signal lines 710A, 710B, 710C and produces a signal if each of these lines carries a "0" or a "1" signal in a certain pattern. The AND gates in a conventional RAM are hardwired. It is possible to omit some of the gates and to create in this way an incomplete look-up table. This would require a dedicated RAM structure for each particular application. For most applications this would not be very practical.

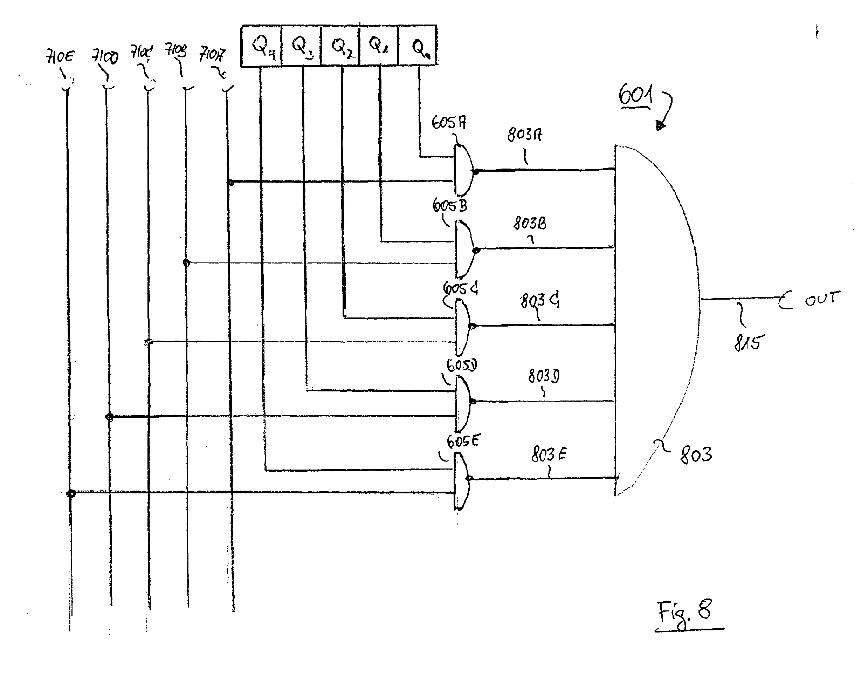

Therefore, in the context of the present invention suggestion is made to use programmable AND gate units instead. An example for such circuit is depicted in **Fig. 8**. The programmable AND gate unit is connected by hardware to all signal lines. By means of programmable one-bit flag memory means it can be determined which of the input channels of the programmable AND gate unit must carry a signal in order to create a signal in the output of the programmable AND gate unit. Now it becomes possible to have random access to a storage with m elements using an address of n bits, and $m<2^n$.

**Fig. 8** shows a schematic circuit diagram of a "programmable gate" to be used in the context of a demultiplexer 601. A first AND-Gate 803 has a plurality of input lines 803A, 803B, 803C, 803D, 803E, each of these input lines 803A, 803B, 803C, 803D, 803E, connected to the output line of a respective AND gate out of a group of second AND gates 605A, 605B, 605C, 605D, 605E. Each of the second AND gates has two input lines, a first input line being connected to one of the input lines 710A, 710B, 710C, 710D, 710E, and the second input line being connected to an associated one-bit storage unit $Q_0$, $Q_1$, $Q_2$, $Q_3$, or $Q_4$ out of a group of one-bit storage units $Q_0$, $Q_1$, $Q_2$, $Q_3$, $Q_4$, respectively. Depending on the status of the one-bit storage units $Q_0$, $Q_1$, $Q_2$, $Q_3$, $Q_4$ the signal on each of the input lines 710A, 710B, 710C, 710D, 710E is relevant or irrelevant for the status of the output line 815 of the programmable gate 601. **Fig. 8** is given for illustrative purposes only. There are other circuits known to the expert showing the same overall behaviour.

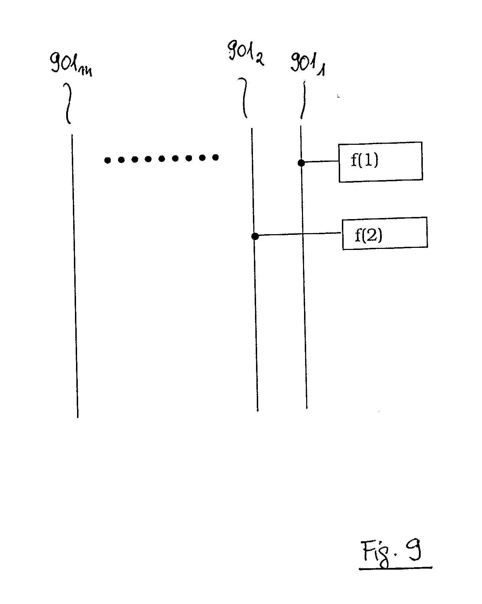

**Fig. 9** shows a schematic circuit diagram illustrating the use of fundamental numbers. Each of m fundamental numbers is represented by a "1" signal on one of the m signal lines $901_1$, $901_2$, $901_m$. If a signal is present on line 1, the output f(1) will be activated. At the same time there can signals be present also on the other lines.

**Fig. 9** effectively shows a RAM from which the demultiplexer has been removed. This device can now process several numbers at the same time - it is operating on fundamental numbers; therefore the input sequence (1,0,0,1) (for instance) will be treated as representing the two different numbers (1,0,0,0) and (0,0,0,1).

We suggest to built either a computer, which operates on fundamental numbers. Or to have several digital computers use the same look-up table at the same time. Each computer would be connected to the look-up table by a demultiplexer, so that several numbers could be input at the same time.

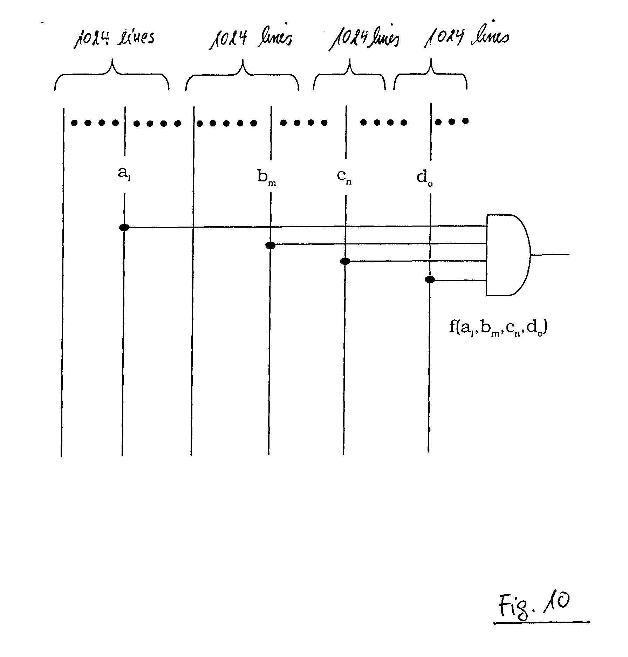

In difference to a conventional RAM, this device does not only write the contents of its storage into the output line, denoted f(address) in **Fig. 6,** but also its address, or its input, if this is needed. In **Fig. 10** a look-up table is shown which operates on four fundamental numbers of input, each fundamental number in this example be represented by 1024 lines. These fundamental numbers may for instance be the output of the particle detector shown in **Fig. 1.** Again, it would be possible to handle the output of the particle detector also by a RAM. But since there are 4096 channels, the RAM would need to have $2^{40}$ storage elements (since it would have four 10-digit numbers as input).

The output lines f(1) and f(2) may represent a final result. For instance the fundamental number 1 may be activated if there was a track in the particle detector shown in **Fig. 1** which has hit a certain tuple of four subsequent boxes. Then for instance f(1) might give the information "there is a track with momentum=2,5 GeV and angle 35.2 degree". f(2) might for example say "there is a track with momentum = 6.1 GeV and angle 20.1 degree". There is no other information needed in this case.

**Fig. 10** shows a schematic circuit diagram illustrating an embodiment of a data processing device based on fundamental numbers adapted in particular for processing of the signals of the detector device shown in **Fig. 1**. Four fundamental numbers of input are provided, represented in the embodiment of **Fig. 10** by 1024 lines $a_i$, i=1,1024, and 1024 lines $b_i$, and 100 lines $c_i$, and 1024 lines $d_i$. Since the four planes of the particle detector in accordance with **Fig.**

**1** are supposed to have 1024 boxes each). Each combination of four hits in four different layers is represented by the corresponding quadruple $a_l$, $b_m$, $c_n$, do (where $a_i$, $b_i$, $c_i$, $d_i$ denote the number of the box hit in layer 1, 2, 3, 4 respectively). A programmable AND gate is programmed to give an output signal when lines $a_m$, $b_m$, $c_n$, do are activated. The output consists in this example of the momentum and the angle of the track. The device in this figure represents therefore a programmable demultiplexer, which operates on fundamental numbers.

In the example of the particle detector shown in **Fig. 1,** the output of the device depicted in **Fig. 10** would consist in the values of the momentum and the angles of the reconstructed tracks one would normally not need to know explicitly which box combination has resulted in a certain track.

For a fluidodynamic calculus as, for example, described in conjunction with the Venturi tube shown in **Fig. 3** instead, the situation would be different. If one processes on the look-up table several calculations at a time, determining the new values for the velocity and the pressure for several fluid cells at the same time, then it is necessary to be able to associate the result of this look-up table calculation to the correct cell number. This can be done in two ways :

- Either the output contains not only the calculated values, but also the address of the corresponding storage element. In this case the computer can determine, which calculated result corresponds to which cell.

- Or each of the lines in Fig. 10, representing a fundamental number, must carry additional information. Either it must carry a temporal sequence of signals, representing for instance a digital number.

- Or each fundamental number must in reality consist of a bus of several lines, again giving the possibility to transmit information about the origin of the signal.

In this scenario, the look-up table would give the result of its "calculation" together with the identity of the input into its output channel. For instance, four fundamental numbers which refer to fluid cell number 301 would carry each the identifier "301". Once the look-up table has determined from these four numbers the new numbers for cell number 301, it would write these new numbers together with the identifier 301 in its output.

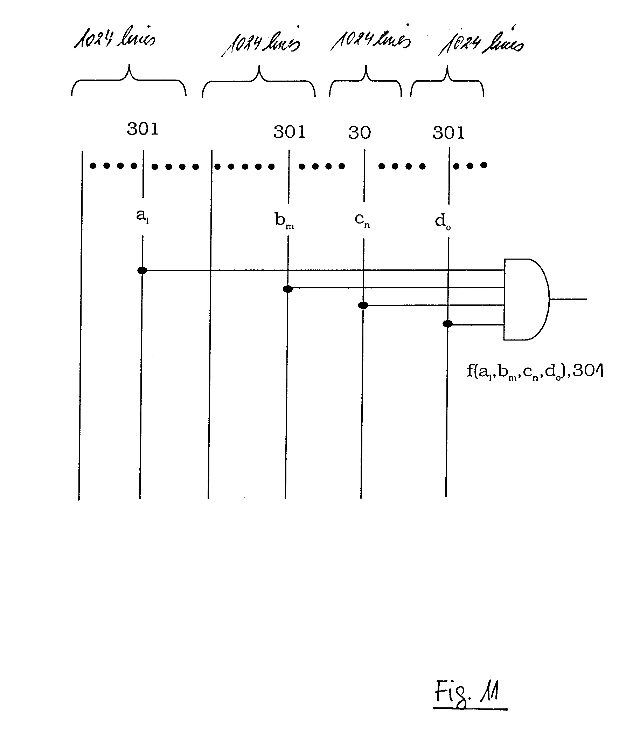

**Fig. 11** shows a schematic circuit diagram illustrating an embodiment of a data processing device based on fundamental numbers further improved over that shown in **Fig. 10** and also being adapted in particular for calculation of the states of the Venturi tube shown in **Fig. 2.** In difference to **Fig. 10,** the input lines do not only transmit a binary "1-0" signal but also an index. In the example depicted in **Fig. 11** the index is "301". This index specifies the intended "destination" of the output. This is for instance necessary for performing a fluid dynamic calculation, where the index would denote the cell number, for which the calculation has been done. In our example, the calculated values for velocity and pressure - given by $f(a_l, b_m, C_n, d_o)$- are attributed to cell number 301.

**Claims**

1. Data processing device adapted for parallely processing a plurality of n digital input numbers $q_i$ composed of $p_i$ bits, each of the of n digital input numbers $q_i$ represented as a fundamental number, comprising

   (a)

$$\sum_{i=1}^{n} 2^{(p_i)}$$

   input lines $L_j$, each of the input lines adapted to represent a fundamental number;
   (b) wherein each possible value within the value range of digital input number $q_i$ is assigned to a predefined one of the input lines $L_j$;
   (c) a plurality of output mapping units,

      (ca) each of the output mapping units creating an output signal responding to a specific coinstantaneous binary pattern of input bits; and
      (cb) each of the output mapping units operating in a parallel fashion to and independently of all other status mapping units of the plurality of output mapping units.

2. Device according to claim 1, further comprising

(a) a plurality of storage means,

(b) each of the output mapping units addressing one of the storage means,

(c) the storage means storing a result value assigned to the specific coinstantaneous binary pattern of input bits.

3. Device according to claim 1 or 2, further comprising data tagging means adapted to receive a tag identifying on the input lines, the tag being output by the output mapping units in response to the tag on the input lines.

4. Device according to claims 1, 2, or 3, wherein the number of output mapping units is less than

$$\sum_{i=1}^{n} 2^{(p_i)}$$

5. Data processing method using a data processing device in accordance with one of the claims 1 to 4, comprising the steps of

(a) accepting an input message in a digital form,

(b) transforming the input message from the digital form into a fundamental number, and

(c) assigning a result message to the fundamental number of the input message.

6. Data processing method using a computer with a storage means storing a look-up table, comprising the steps of:

(a) accepting an input message in a digital form;

(b) transforming the input message into an address value by utilizing a predefined symmetry relation, the said symmetry relation mapping at least one predefined plurality of input messages to the address value in accordance with predefined symmetry properties, whereby different pluralities of input messages are allowed to be mapped to different address values;

(c) using the address value as an address for accessing the look-up table stored in the storage means by retrieving an output value stored in the storage means at the address given by the address value.

7. Data processing method using a computer with a storage means storing a first look-up table and a plurality of second look-up tables, comprising the steps of:

(a) accepting an input message in a digital form;

(b) using the input message as an address for accessing the first look-up table stored in the storage means by retrieving a first output value of a lower precision stored in the storage means at the address given by the address value;

(c) selecting one of the second look-up tables in response to the first output value;

(d) using the input message as an address for accessing the selected one of the second look-up tables of a higer numerical precision stored in the storage means by retrieving a second output value stored in the storage means at the address given by the input message.

8. Data processing method using a computer with a storage means storing a first look-up table and a plurality of second look-up tables, comprising the steps of:

(a) accepting an input message in a digital form;

(b) transforming the input message into an address value valid for the first look-up table by utilizing a predefined aggregation relation, the said aggregation relation mapping at least one predefined plurality of input messages to the address value;

(c) using the address value as an address for accessing the first look-up table stored in the storage means by retrieving a first output value stored in the storage means at the address given by the address value;

(d) selecting one of the second look-up tables in response to the first output value;

(e) using the input message as an address for accessing the selected one of the second look-up tables stored in the storage means by retrieving a second output value stored in the storage means at the address given by the input message.

9. Data processing device for performing calculations on the status of a physical system, the physical system made up of a plurality of physical subsystems, comprising

a) a plurality of distinct input signal channels adapted for inputting a plurality of signals;

aa) each of the input signal channels representing the state of a corresponding physical subsystem;
ab) wherein each of the said distinct input signal channels comprises at least one binary subchannel;
ac) each subchannel having its own subchannel path, each subchannel path being capable of conducting a corresponding subchannel binary status information independently from all other subchannels; and
ad) each of the binary subchannels representing the status of the subsystem respectively associated with the said subchannel;

b) a plurality of status mapping units,

ba) each of the status mapping units creating an output signal responding to a specific coinstantaneous binary pattern of binary subchannels; and
bb) each of the status mapping units operating in a parallel fashion to and independently of all other status mapping units of the plurality of status mapping units.

10. Device according to claim 9, **characterised in that** at least a subset of the plurality of status mapping units are dynamically reconfigurable, the dynamic configuration determining the specific coinstantaneous binary pattern of binary subchannels to which the respective output signal responds.

11. Device according to claims 9 or 10, **characterised in that** the signals are electrical signals.

12. Device according to claim 11, **characterised in that** the subchannel paths are electrical lines.

13. Device according to claims 9 or 10, **characterised in that** the signals are electromagnetic waves.

14. Device according to claim 13, **characterised in that** the signals are optical waves.

15. Device according to claim 14, **characterised in that** the subchannel paths are optical fibres.

16. Device according to one of the claims 9 to 15, **characterised in that** for at least one specific coinstantaneous binary pattern of binary subchannels representing at least one noisy state of at least one subsystem no corresponding status mapping unit is provided.

17. Data processing method for performing calculations on the status of a physical system, the physical system made up of a plurality of physical subsystems, the method comprising the steps of:

a) representing the status of each of the subsystems on an input channel by a at least one binary value conducted through at least one respective subchannel having its own subchannel path, each subchannel path being capable of conducting a corresponding subchannel binary status information independently from all other subchannels;
b) creating, in a parallel fashion and independent from each other, at least two output signals, each of the output signals responding to a specific coinstantaneous binary pattern of binary subchannels.

18. Data processing device for performing calculations on the status of a physical system, the status being represented by a n-bit data word; the device comprising:

a) an input section capable of accepting the said n-bit input data word;
b) an output section capable of outputting a m-bit output data word responding to the said n-bit input data word;
c) the state space of the physical system being subdivided into at least two subspaces;
c) for each of the subspaces, a data mapping memory section, each section capable of mapping a non-overlapping subset of a plurality of different n-bit input data words to a single one of a plurality of different m-bit output data words.

19. Device according to claim 18, **characterised in that** the at least two subspaces are non-overlapping.

**20.** Method of performing calculations on the status of a physical system, the status being represented by a n-bit data word; the method comprising the steps of:

a) decomposition of the state space of the physical system into at least two disjunct subspaces;
b) determining, for each n-bit data word representing the status, the proper subspace to which it belongs;
c) applying a subspace-specific look-up table for determining an output value.

**21.** Use of a random access memory for performing calculations on the status of a physical system, the physical system made up of a plurality of disjunct physical subsystems $S_i$;

a) the status of the i-th subsystem $S_i$ being represented by a digital number $Q_i$ of $b_i$ bits width;
b) the random access memory being equipped with an interface to an address bus of n bits width,
c) where $\sum b_i = n$;
d) the digital numbers $Q_i$ of $b_i$ bits width representing the status of the i-th subsystem $S_i$, respectively, arranged in a sequence to form an address value A;
e) the address value A fed into the address bus of the random access memory;
f) an output value P being stored in the random access memory for each address value A.

Fig. 1

All tracks with p=2 GeV

track with p=2 GeV

x2

x1

Fig. 2

Fig. 3

Fig. 4

Fig.5

Fig. 6

Fig.7

Fig. 8

$901_m$    $901_2$   $901_1$

f(1)

f(2)

Fig. 9

Fig. 10

1024 lines · 1024 lines · 1024 lines · 1024 lines

301   301   30   301

$a_l$   $b_m$   $c_n$   $d_o$

$f(a_l, b_m, c_n, d_o), 301$

Fig. 11

**European Patent Office**

**EUROPEAN SEARCH REPORT**

Application Number

EP 03 00 4962

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | VERKERK C: "USE OF INTELLIGENT DEVICES IN HIGH-ENERGY PHYSICS EXPERIMENTS" PROCEEDINGS OF THE 1980 CERN SCHOOL OF COMPUTING. VRAONA-ATTIKI, 14- 27 SEPTEMBER 1980, GENEVA, CERN, CH, 1 September 1980 (1980-09-01), pages 282-324, XP000758335 * paragraph [04.1]; figures 15,16 * | 1-21 | G06F17/00 |
| X | REDUS R H ET AL: "Design, development, and calibration of a high energy proton telescope for space radiation studies" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 482, no. 1-2, 11 April 2002 (2002-04-11), pages 281-296, XP004353069 ISSN: 0168-9002 * paragraphs [03.2]-[03.3] * | 1-21 | TECHNICAL FIELDS SEARCHED (Int.Cl.7)  G06F |

The present search report has been drawn up for all claims

| Place of search | Date of completion of the search | Examiner |
|---|---|---|
| MUNICH | 5 September 2003 | Thibaudeau, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)